# EUROPEAN PATENT SPECIFICATION

(11) **EP 3 269 050 B1**
(45) Date of publication and mention of the grant of the patent: **04.12.2019**
(21) Application number: 15775827.7
(22) Date of filing: 10.09.2015
(51) Int. Cl.: H04B 7/08, G01S 3/46, G01S 19/36, G01S 19/42, G01S 5/02

(54) **METHODS OF ANTENNA SELECTION BASED ON MOVEMENT/ORIENTATION, AND RELATED WIRELESS ELECTRONIC DEVICES**
VERFAHREN ZUR ANTENNENAUSWAHL AUF DER GRUNDLAGE VON BEWEGUNG/AUSRICHTUNG UND ZUGEHÖRIGE DRAHTLOSE ELEKTRONISCHE VORRICHTUNGEN
PROCÉDÉS DE SÉLECTION D'ANTENNE SELON LE MOUVEMENT/L'ORIENTATION ET DISPOSITIFS ÉLECTRONIQUES SANS FIL ASSOCIÉS

(30) Priority: 13.03.2015 US 201514657353
(43) Date of publication of application: 17.01.2018
(73) Proprietor: Sony Corporation, Tokyo 108-0075 (JP)
(72) Inventor: AGARDH, Kare, S-22188 Lund (SE); THORN, Ola, S-21612 Limhamn (SE); KRISTENSSON, Andreas, S-22188 Lund (SE); HUNT, Alexander, S-21872 Tygelsjo (SE)
(74) Representative: Neusser, Sebastian
(86) International application number: PCT/JP2015/004614
(87) International publication number: WO 2016/147224

(56) References cited:
- WO-A1-2015/183472
- US-A1- 2013 035 051
- US-A1- 2013 156 080
- US-B1- 7 986 269

## Description

### Technical Field

The present inventive concepts generally relate to the field of wireless communications.

### Background Art

Satellite-based positioning may not work well indoors and may consume significant amounts of power for wireless electronic devices, thus reducing battery life. Moreover, although wireless electronic devices can provide increased performance by using more than one antenna, the use of multiple antennas (whether for receiving satellite signals, Wi-Fi signals, Bluetooth signals, or cellular signals) can increase power consumption.

US 7,986,269 B1 describes a GPS (Global Positioning System) receiver with multiple antennas oriented in different positions. The antennas may be selected depending on acceleration measurements. US 2013/0035051 A1 describes an antenna switching system with adaptive switching criteria for switching between different antennas, e.g., based on signal strength measurements. US 2013/0156080 A1 describes methods and systems for selecting one of a plurality of antennas based on an orientation of a user device.

WO2015/183472 A1 is part of the state of the art under Article 54(3) EPC and discloses a method for selecting, at a user equipment, a sub-array for communication based on the orientation of the user equipment and a desired communication direction.

### Summary

The present invention provides a method of antenna selection as defined in claim 1 and a first wireless electronic device as defined in claim 10. The dependent claims define further embodiments.

The method includes detecting movement of the first wireless electronic device. The method includes selecting an antenna, among a plurality of antennas of the first wireless electronic device, in response to the movement of the first wireless electronic device. Moreover, the method includes measuring a positioning-related characteristic of a signal from a second wireless electronic device, using the antenna that was selected in response to the movement.

In some embodiments, selecting the antenna may include selecting two or more antennas, and measuring may include measuring using the two or more antennas that were selected in response to the movement. Additionally or alternatively, measuring may include measuring without using any unselected antenna among the plurality of antennas of the first wireless electronic device. Moreover, in some embodiments, selecting the two or more antennas may include selecting one or more pairs of antennas, and measuring may include measuring using the one or more pairs of antennas and without using any unselected antenna.

In various embodiments, detecting the movement of the first wireless electronic device may include detecting a direction of the movement of the first wireless electronic device. Moreover, selecting the antenna may include selecting the antenna in response to detecting the direction of the movement of the first wireless electronic device and irrespective of signal conditions at the first wireless electronic device.

According to various embodiments, detecting the movement of the first wireless electronic device may include detecting a direction of the movement of the first wireless electronic device, and selecting the two or more antennas may include selecting the two or more antennas in response to detecting the direction of the movement of the first wireless electronic device. In some embodiments, the two or more antennas may define a plane that is intersected by the direction of the movement of the first wireless electronic device at an angle of at least about 45 degrees, and selecting the two or more antennas may include selecting the two or more antennas that define the plane that is intersected by the direction of the movement of the first wireless electronic device at the angle of at least about 45 degrees. Moreover, any unselected antenna among the plurality of antennas of the first wireless electronic device may be substantially outside of the plane, and measuring may include measuring, using the two or more antennas that define the plane that is intersected by the direction of the movement of the first wireless electronic device at the angle of at least about 45 degrees, and without using any unselected antenna among the plurality of antennas of the first wireless electronic device that is substantially outside of the plane.

In various embodiments, the plane may be defined by respective primary surfaces of the two or more antennas and may substantially face in the direction of the movement of the first wireless electronic device. Moreover, measuring may include measuring, using the two or more antennas that define the plane that substantially faces in the direction of the movement of the first wireless electronic device, and without using any unselected antenna among the plurality of antennas of the first wireless electronic device that is substantially outside of the plane.

According to the invention, measuring includes: receiving the signal from the second wireless electronic device via the antenna that was selected in response to the movement; and determining a position of the first wireless electronic device with respect to the second wireless electronic device, using the signal received from the second wireless electronic device via the antenna that was selected in response to the movement. The signal received from the second wireless electronic device comprises a short-range wireless signal, and determining the position includes estimating an angle between the first wireless electronic device and the second wireless electronic device, using the short-range wireless signal received from the second wireless electronic device via the antenna that was selected in response to the movement.

In various embodiments, the first wireless electronic device may be a wearable wireless electronic device, the short-range wireless signal may be a Bluetooth signal or a Wireless Local Area Network (WLAN) signal, and operations of estimating the angle between the first wireless electronic device and the second wireless electronic device may include estimating the angle between the wearable wireless electronic device and the second wireless electronic device, using the Bluetooth signal or the WLAN signal received from the second wireless electronic device via the antenna that was selected in response to the movement.

According to various embodiments, the angle between the wearable wireless electronic device and the second wireless electronic device may include an angle of arrival of the Bluetooth signal or WLAN signal at the wearable wireless electronic device, and determining the position may include determining the position of the wearable wireless electronic device, using the angle of arrival of the Bluetooth signal or WLAN signal. Moreover, the signal may be a first signal, and determining the position of the first wireless electronic device with respect to the second wireless electronic device may include determining a first relative position of the first wireless electronic device that is relative to the second wireless electronic device, using the first signal received from the second wireless electronic device via the antenna that was selected in response to the movement.

In various embodiments, the method may include receiving a second signal, via the antenna, before detecting the movement of the first wireless electronic device. The method may include determining a second relative position of the first wireless electronic device that is relative to the second wireless electronic device, using the second signal received from the second wireless electronic device via the antenna, before detecting the movement of the first wireless electronic device. The method may include comparing the first and second relative positions of the first wireless electronic device. Moreover, the method may include calculating a position-location of the first wireless electronic device, using a result of comparing the first and second relative positions of the first wireless electronic device.

According to the invention, the first wireless electronic device includes a plurality of antennas, a sensor configured to detect movement of the first wireless electronic device, and a processor. The processor is configured to select an antenna, among the plurality of antennas of the first wireless electronic device, in response to the movement of the first wireless electronic device. Moreover, the processor is configured to measure a positioning-related characteristic of a signal received from a second wireless electronic device via the antenna that was selected in response to the movement. Measuring the positioning-related characteristic includes: receiving the signal from the second wireless electronic device via the antenna that was selected in response to the movement; and determining a position of the first wireless electronic device with respect to the second wireless electronic device, using the signal received from the second wireless electronic device via the antenna that was selected in response to the movement. The signal received from the second wireless electronic device comprises a short-range wireless signal, and determining the position includes estimating an angle between the first wireless electronic device and the second wireless electronic device, using the short-range wireless signal received from the second wireless electronic device via the antenna that was selected in response to the movement. The angle is estimated in terms of an angle of arrival of the short-range wireless signal received from the second wireless electronic device.

In various embodiments, the processor may be configured to select two or more antennas, among the plurality of antennas of the first wireless electronic device, in response to the movement of the first wireless electronic device. Moreover, the processor may be configured to measure the positioning-related characteristic of the signal from the second wireless electronic device, using the two or more antennas that were selected in response to the movement, and without using any unselected antenna among the plurality of antennas of the first wireless electronic device.

According to various embodiments, the sensor may be configured to detect a direction of the movement of the first wireless electronic device, and the processor may be configured to select the two or more antennas in response to detecting the direction of the movement of the first wireless electronic device. In some embodiments, the two or more antennas may define a plane that is intersected by the direction of the movement of the first wireless electronic device at an angle of at least about 45 degrees, and the processor may be configured to select the two or more antennas that define the plane that is intersected by the direction of the movement of the first wireless electronic device at the angle of at least about 45 degrees, in response to detecting the direction of the movement of the first wireless electronic device. Moreover, any unselected antenna among the plurality of antennas of the first wireless electronic device may be substantially outside of the plane, and the processor may be configured to measure the positioning-related characteristic of the signal from the second wireless electronic device, using the two or more antennas that define the plane that is intersected by the direction of the movement of the first wireless electronic device at the angle of at least about 45 degrees, and without using any unselected antenna among the plurality of antennas of the first wireless electronic device that is substantially outside of the plane. In some embodiments, the wireless electronic device may include a transceiver circuit configured to provide communications with the second wireless electronic device via a short-range communications link, where the signal may include a short-range wireless signal, and where the first wireless electronic device may be a wearable wireless electronic device.

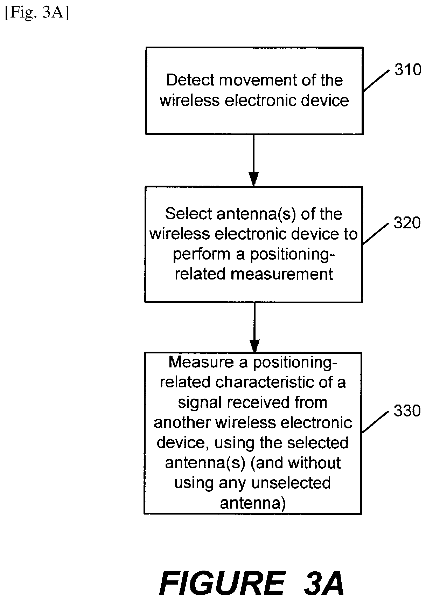

Other devices, methods, and/or systems according to embodiments of present inventive concepts will be or become apparent to one with skill in the art upon review of the following drawings and detailed description. It is intended that all such additional devices and/or systems be included within this description, be within the scope of present inventive concepts, and be protected by the accompanying claims. Moreover, it is intended that all embodiments disclosed herein can be implemented separately or combined in any way and/or combination. Furthermore, the flowchart blocks illustrated herein may, in some embodiments, correspond to respective modules (which may have corresponding circuitry) that perform the operations illustrated in the flowchart blocks. For example, a wireless electronic device described herein may optionally have a detection module, a selection module, and a measurement module configured to perform the operations illustrated in Blocks 310, 320, and 330, respectively, of Figure 3A.

### Brief Description of Drawings

Figure 1 is a schematic diagram of a communication system that includes a wireless electronic device, according to some embodiments of present inventive concepts.
Figure 2 illustrates a block diagram of a wireless electronic device of Figure 1, according to some embodiments of present inventive concepts.
Figure 3A illustrates a flowchart of operations of a wireless electronic device of Figure 1, according to some embodiments of present inventive concepts.
Figure 3B illustrates a flowchart of operations of a wireless electronic device of Figure 1, according to some embodiments of present inventive concepts.
Figure 3C illustrates a flowchart of operations of a wireless electronic device of Figure 1, according to some embodiments of present inventive concepts.
Figure 3D illustrates a flowchart of operations of a wireless electronic device of Figure 1, according to some embodiments of present inventive concepts.
Figure 3E illustrates a flowchart of operations of a wireless electronic device of Figure 1, according to some embodiments of present inventive concepts.
Figure 3F illustrates a flowchart of operations of a wireless electronic device of Figure 1, according to some embodiments of present inventive concepts.
Figure 4A illustrates a diagram of a wearable wireless electronic device of Figure 1, according to some embodiments of present inventive concepts.
Figure 4B illustrates a diagram of antennas of a wireless electronic device of Figure 1, according to some embodiments of present inventive concepts.
Figure 4C illustrates a diagram of antennas of a wireless electronic device of Figure 1, according to some embodiments of present inventive concepts.

### Description of Embodiments

The present inventive concepts now will be described more fully with reference to the accompanying drawings, in which embodiments of the inventive concepts are shown. However, the present application should not be construed as limited to the embodiments set forth herein. Rather, these embodiments are provided so that this disclosure will be thorough and complete, and to fully convey the scope of the embodiments to those skilled in the art. Like reference numbers refer to like elements throughout.

The terminology used herein is for the purpose of describing particular embodiments only and is not intended to be limiting of the embodiments. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, steps, operations, elements, and/or components, but do not preclude the presence or addition of one or more other features, steps, operations, elements, components, and/or groups thereof.

It will be understood that when an element is referred to as being "coupled," "connected," or "responsive" to another element, it can be directly coupled, connected, or responsive to the other element, or intervening elements may also be present. In contrast, when an element is referred to as being "directly coupled," "directly connected," or "directly responsive" to another element, there are no intervening elements present. As used herein, the term "and/or" includes any and all combinations of one or more of the associated listed items.

Spatially relative terms, such as "above," "below," "upper," "lower," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly. Well-known functions or constructions may not be described in detail for brevity and/or clarity.

It will be understood that, although the terms "first," "second," etc. may be used herein to describe various elements, these elements should not be limited by these terms. These terms are only used to distinguish one element from another. Thus, a first element could be termed a second element without departing from the teachings of the present embodiments.

Unless otherwise defined, all terms (including technical and scientific terms) used herein have the same meaning as commonly understood by one of ordinary skill in the art to which these embodiments belong. It will be further understood that terms, such as those defined in commonly-used dictionaries, should be interpreted as having a meaning that is consistent with their meaning in the context of the relevant art and will not be interpreted in an idealized or overly-formal sense unless expressly so defined herein.

Portable wireless electronic devices, such as wearable wireless electronic devices, mobile phones, and tablets, may use a plurality of antennas. Moreover, the antennas can sometimes be used to receive/measure signals to provide positioning information. Using all of the antennas in a particular portable electronic device contemporaneously for such measurements, however, may undesirably increase power consumption. Accordingly, various embodiments of present inventive concepts use one or more inertial/movement sensors to select a subset of antennas to use/enable to perform measurement(s). The terms inertial/movement sensors, as used herein, may refer to accelerometers, gyroscopes, or other inertial/movement sensors. Moreover, the selected antennas receive signals and measure an angle toward a remote (e.g., physically separate) device that is transmitting the signals (e.g., Bluetooth or Wireless Local Area Network (WLAN) signals). Accordingly, a wireless electronic device may select the best combination of antennas (best in terms of a direction the antennas are facing) based on input from the sensor(s) and may use the selected low-power antennas to perform the measurement(s).

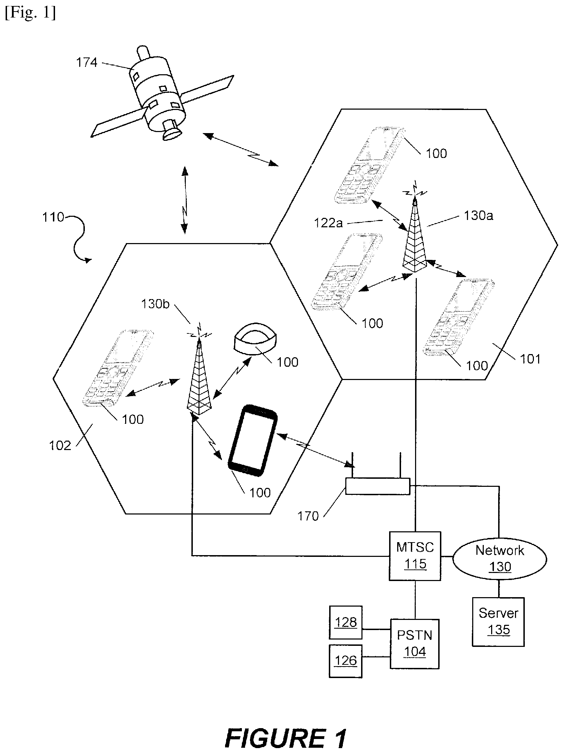

Referring to Figure 1, a schematic diagram is provided of a wireless communication network 110 that supports communications in which wireless electronic devices 100 can be used according to some embodiments of present inventive concepts. The network 110 may include cells 101, 102 and base stations 130a, 130b in the respective cells 101, 102. Networks 110 may be used to provide voice and data communications to subscribers using various radio access standards/technologies. The network 110 illustrated in Figure 1 may include wireless electronic devices 100 that may communicate with the base stations 130a, 130b. The wireless electronic devices 100 in the network 110 may additionally or alternatively communicate with a Global Positioning System (GPS) satellite 174, a local wireless network 170, a Mobile Telephone Switching Center (MTSC) 115, and/or a Public Service Telephone Network (PSTN) 104 (i.e., a "landline" network).

The wireless electronic devices 100 can communicate with each other via the MTSC 115 and/or the local wireless network 170. The wireless electronic devices 100 can also communicate with other devices/terminals, such as terminals 126, 128, via the PSTN 104 that is coupled to the network 110. As also shown in Figure 1, the MTSC 115 may be coupled to a computer server 135 via a network 130, such as the Internet.

The network 110 may be organized as cells 101, 102 that collectively can provide service to a broader geographic region. In particular, each of the cells 101, 102 can provide service to associated sub-regions (e.g., regions within the hexagonal areas illustrated by the cells 101, 102 in Figure 1) included in the broader geographic region covered by the network 110. More or fewer cells can be included in the network 110, and the coverage areas for the cells 101, 102 may overlap. The shape of the coverage area for each of the cells 101, 102 may be different from one cell to another and is not limited to the hexagonal shapes illustrated in Figure 1. The base stations 130a, 130b in the respective cells 101, 102 can provide wireless communications between each other and the wireless electronic devices 100 in the associated geographic region covered by the network 110.

Each of the base stations 130a, 130b can transmit/receive data to/from the electronic devices 100 over an associated control channel. For example, the base station 130a in cell 101 can communicate with one of the wireless electronic devices 100 in cell 101 over a control channel 122a. The control channel 122a can be used, for example, to page a wireless electronic device 100 in response to calls directed thereto or to transmit traffic channel assignments to the wireless electronic device 100 over which a call associated therewith is to be conducted.

The wireless electronic devices 100 may also be capable of receiving messages from the network 110 over the respective control channels 122a. In various embodiments, the wireless electronic devices 100 may receive Short Message Service (SMS), Enhanced Message Service (EMS), Multimedia Message Service (MMS), and/or Smartmessaging TM formatted messages.

The GPS satellite 174 can provide GPS information to the geographic region including cells 101, 102 so that the wireless electronic devices 100 may determine location information. The network 110 may also provide network location information as the basis for the location information applied by the wireless electronic devices 100. In addition, the location information may be provided directly to the server 135 rather than to the wireless electronic devices 100 and then to the server 135. Additionally or alternatively, the wireless electronic devices 100 may communicate with the local wireless network 170 (e.g., WLAN/Wi-Fi or Bluetooth).

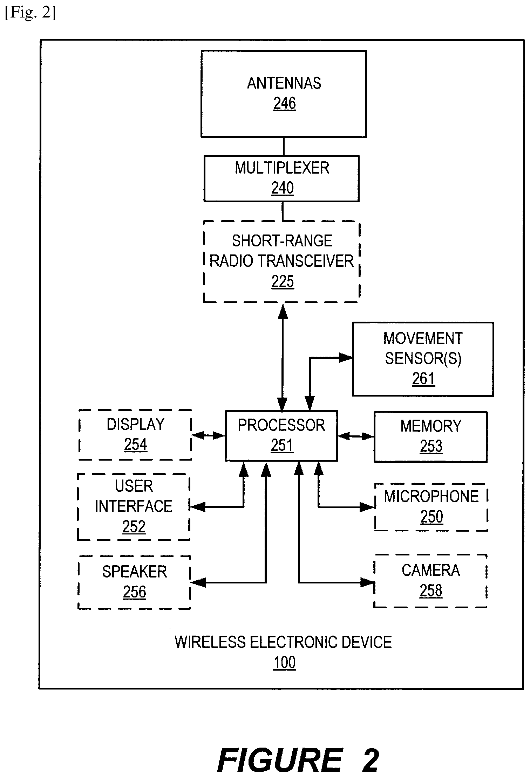

Referring now to Figure 2, a block diagram of a wireless electronic device 100 of Figure 1 is provided, according to some embodiments of present inventive concepts. As illustrated in Figure 2, the wireless electronic device 100 may include a plurality of antennas 246, a multiplexer 240 configured to select a subset (rather than all) of the plurality of antennas 246, and one or more sensors 261 configured to detect movement of the wireless electronic device 100, as well as a processor 251 (e.g., processor circuit) and a memory 253. The sensor(s) 261 may include one or more accelerometers, gyroscopes, and/or other sensors configured to detect movement/inertia (and/or orientation) of the wireless electronic device 100. The wireless electronic device 100 may optionally include a display 254, a user interface 252, and/or a camera 258, if the wireless electronic device 100 is, for example, a mobile telephone or a laptop/tablet computer. Alternatively, if the wireless electronic device 100 is a wearable wireless electronic device (e.g., as illustrated by the round/loop-shaped wireless electronic device 100 in Figure 1), then one or more of the display 254, the user interface 252, and the camera 258 may be omitted. Moreover, the wireless electronic device 100 may include a short-range radio transceiver (e.g., a short-range radio transceiver circuit) 225. Although short-range radio communications (e.g., Wi-Fi, Bluetooth, etc.) are discussed herein by way of example, other over-the-air wireless communications (e.g., cellular wireless communications) may be provided instead of, or in addition to, short-range radio communications.

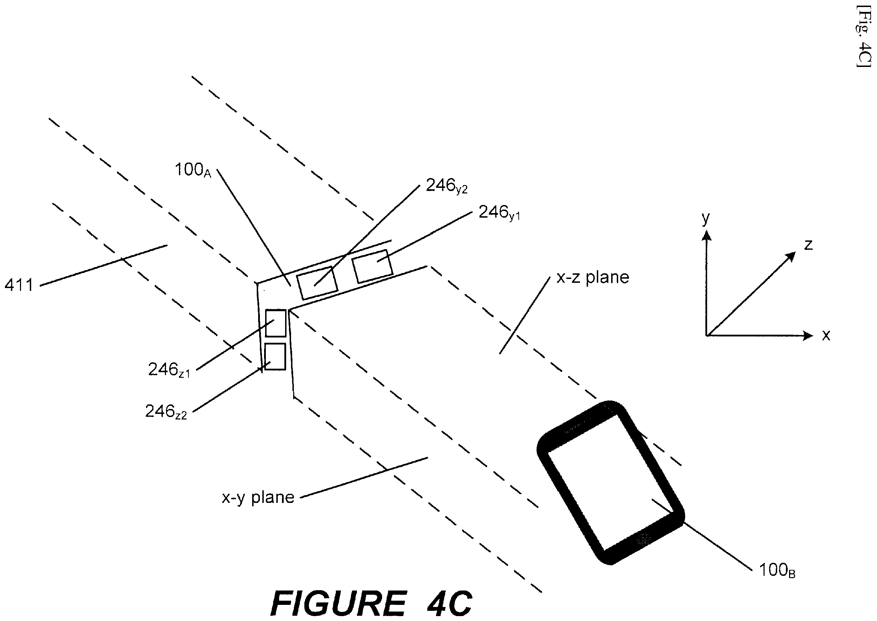

A transmitter portion of the short-range radio transceiver 225 may convert information, which is to be transmitted by the wireless electronic device 100, into electromagnetic signals suitable for radio communications (e.g., directly to another wireless electronic device 100, or to the local wireless network 170 or the base station 130a/130b, illustrated in Figure 1). A receiver portion of the short-range radio transceiver 225 may demodulate electromagnetic signals (e.g., wireless signals received by the wireless electronic device 100 directly from the other wireless electronic device 100, or from the local wireless network 170 or the base station 130a/130b), to provide information contained in the signals in a format understandable to the processor 251 and/or a user 411 (illustrated in Figure 4C) of the wireless electronic device 100.

The wireless electronic device 100 is not limited to any particular combination/arrangement of the user interface 252 and the display 254. For example, the user interface 252 may be an input interface that accepts inputs (e.g., touch, click, motion, proximity, or keypad inputs) from the user 411. Moreover, the display 254 may be referred to as a user interface that provides graphical/visual outputs to the user 411. As an example, the functions of the user interface 252 and the display 254 may be provided by a touch screen through which the user 411 can view information, such as computer-displayable files, provide input thereto, and otherwise control the wireless electronic device 100. In particular, regardless of whether the wireless electronic device 100 is a mobile/cellular telephone, a tablet computer, a wearable wireless electronic device, or another device, a touch screen may optionally provide/integrate the user interface 252 and the display 254. Additionally or alternatively, the wireless electronic device 100 may include a separate user interface 252 and display 254. For example, user input may be accepted through a touchpad, a mouse, or another user input interface that is separate from the display 254. Moreover, in some embodiments, the wireless electronic device 100 may optionally include a speaker 256 and a microphone 250.

Referring still to Figure 2, the memory 253 can store computer program instructions that, when executed by the processor circuit 251, carry out operations of the wireless electronic device 100 (e.g., as illustrated in the flowcharts of Figures 3A-3F). As an example, the memory 253 can be non-volatile memory, such as a flash memory, that retains the stored data while power is removed from the memory 253.

Referring now to Figures 3A-3F, flowcharts of operations of a wireless electronic device 100 of Figure 1 are provided, according to some embodiments of present inventive concepts. In particular, the flowcharts illustrate operations of antenna selection in the wireless electronic device 100. For example, referring to Figure 3A, the operations may include detecting (Block 310) movement of the wireless electronic device 100. Specifically, the wireless electronic device 100 may use one or more of the sensor(s) 261 to detect the movement.

Next, the operations of the wireless electronic device 100 may include selecting (Block 320) one or more antennas 246, among a plurality of antennas 246 of the wireless electronic device 100, in response to the movement of the wireless electronic device 100. For example, any wireless electronic device 100 illustrated in Figure 1 may include a multiplexer 240 (and/or other switching/selection circuitry/software) that is configured to select a subset (rather than all) of the plurality of antennas 246, in response to the movement of the wireless electronic device 100.

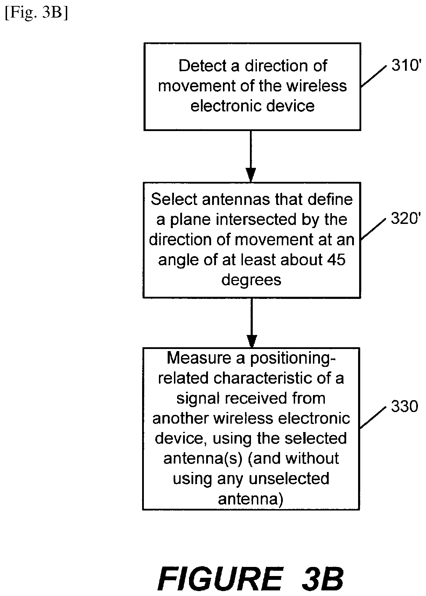

Moreover, referring still to Figure 3A, the operations may include measuring (Block 330) a positioning-related characteristic, in particular an angle of arrival, of a signal received at the wireless electronic device 100 from another wireless electronic device, using the antenna(s) 246 selected in response to the movement. In other words, the measurement(s) may be performed without using any unselected antenna among the plurality of antennas 246. Thus, the only ones of the antennas 246 used in Block 330 are the selected ones of the antennas 246. The measurement(s) may identify, or may be used to determine, a position of the wireless electronic device 100 (a) relative to the other wireless electronic device (e.g., an angle toward/distance from the other wireless electronic device) and/or (b) in absolute terms (e.g., the coordinates/position-on-a-map of the wireless electronic device 100). Accordingly, the operations of Figure 3A (which can be combined/modified with operations of any one of Figures 3B-3F) may allow the wireless electronic device 100 to select a subset of the antennas 246 that can be used to accurately determine/measure a position with respect to the other wireless electronic device, while consuming a smaller amount of power than would be consumed if every antenna (or if antennas facing away from the signal source) among the plurality of antennas 246 were used to perform the measurement(s).

Furthermore, as used herein, the words "another wireless electronic device" and "the other wireless electronic device" may refer to a beacon/transmitter/signal source of the local wireless network 170, the base station 130a/130b, or a different one of the wireless electronic devices 100 illustrated in Figure 1. For example, the other wireless electronic device may be a different one of the wireless electronic devices 100 that may directly transmit Bluetooth signals, or other short-range wireless signals, to the wireless electronic device 100. Accordingly, the measurement in Block 330 may be a measurement of a signal received from the beacon/transmitter/signal source of the local wireless network 170, the base station 130a/130b, or a different one of the wireless electronic devices 100. Thus, the signal may be a short-range communications signal or a cellular communications signal. Moreover, the operations in Block 320 of selecting the antenna(s) 246 in response to detecting the movement of the wireless electronic device 100 may be performed irrespective of signal conditions (e.g., signal strength/quality) at the wireless electronic device 100.

Referring now to Figure 3B, operations of selecting (Block 320) a subset of the antennas 246 may include selecting (Block 320') two or more antennas 246 that define a plane that is intersected by the direction of the movement of the wireless electronic device 100 at an angle of at least about forty-five (45) degrees. For example, if the wireless electronic device 100 is moving substantially in a direction x, then the selected subset of the antennas 246 will include two or more of the antennas 246 that define (or otherwise are in) a plane that is intersected by the direction x at an angle of at least 45 degrees. In some embodiments, the angle of intersection may be anywhere in the range of about 45 degrees to about one hundred thirty-five (135) degrees. In other words, primary surfaces of the respective ones of the selected subset of the antennas 246 may define a plane that may deviate from a ninety (90) degree intersection with the direction of movement by up to about 45 degrees. Thus, the selected subset of the antennas 246 may sometimes not directly face the direction of movement, but rather may face the direction of movement to a greater degree than do unselected ones of the antennas 246.

In some embodiments, however, the plane that is defined by the two or more selected antennas 246 may substantially face the direction of movement. In other words, the plane may be intersected by the direction of movement at an angle of about 90 degrees, and thus may be substantially perpendicular to the direction of movement. Moreover, in some embodiments, the two or more antennas 246 selected by the wireless electronic device 100 may include one or more pairs of the antennas 246. The present inventive entity appreciates, however, that a combination of antennas 246 selected herein (e.g., in Figures 3A-3F) may use any subset of the plurality of antennas 246 and is not limited to predefined pairs of the antennas 246.

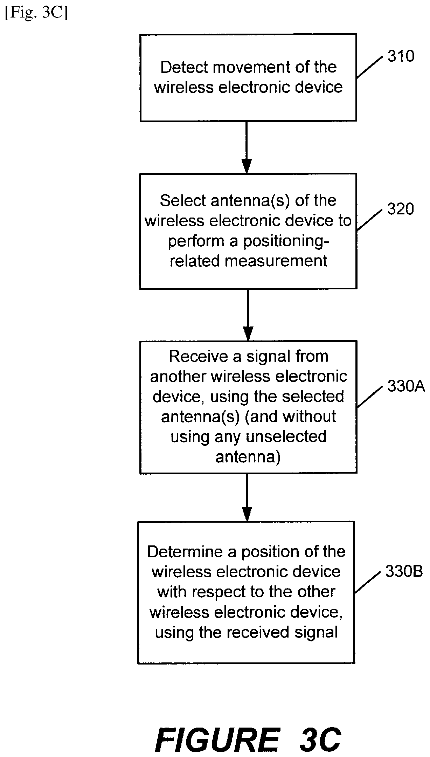

Referring now to Figure 3C, operations of measuring (Block 330) the positioning-related characteristic may include receiving (Block 330A) the signal from the other wireless electronic device via the antenna(s) 246 selected in response to the movement. Operations of measuring (Block 330) the positioning-related characteristic may also include determining (Block 330B) a position of the wireless electronic device 100 with respect to the other wireless electronic device, using the signal received from the other wireless electronic device via the antenna(s) 246 selected in response to the movement. For example, the wireless electronic device 100 may determine/identify the positioning-related characteristic of the signal (e.g., using signal processing and/or other techniques) and may use the positioning-related characteristic to determine the position (relative to the other wireless electronic device and/or in absolute terms) of the wireless electronic device 100. The positioning-related characteristic may be (i) an angle of arrival/departure of the received signal, (ii) information from which the angle of arrival/departure may be derived, or (iii) another characteristic defining/indicating a position of the wireless electronic device 100 relative to the other wireless electronic device.

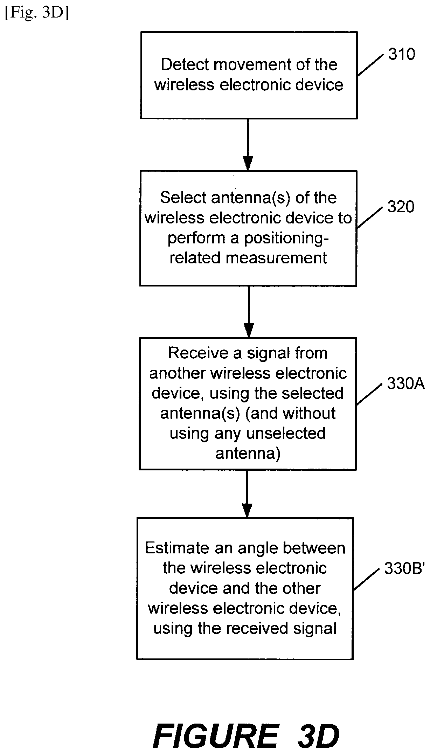

Referring now to Figure 3D, operations of determining (Block 330B) the position of the wireless electronic device 100 includes estimating (Block 330B') an angle between the wireless electronic device 100 and the other wireless electronic device, using the signal (e.g., a short-range wireless signal) received from the other wireless electronic device via the antenna(s) 246 selected in response to the movement.

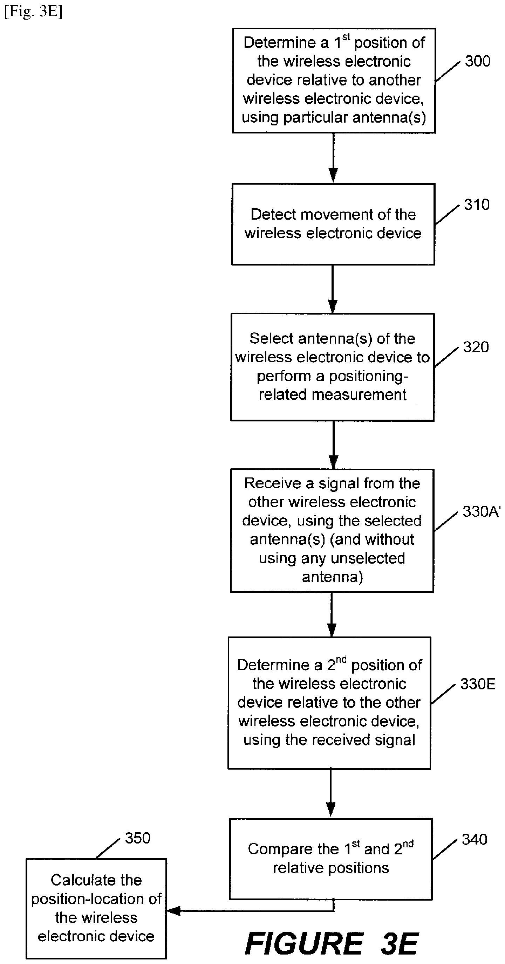

Referring now to Figure 3E, operations of the wireless electronic device 100 may further include receiving a signal, via a subset of the plurality of antennas 246, and determining (Block 300) a relative position of the wireless electronic device 100 that is relative to the other wireless electronic device, using the received signal, before detecting (Block 310) the movement of the wireless electronic device 100. When the wireless electronic device 100 subsequently receives (Block 330A') a different signal from the other wireless electronic device, via the same subset of antennas 246 that was used in Block 300, then operations of determining (Block 330B) the position of the wireless electronic device 100 may include determining (Block 330E) another relative position of the wireless electronic device 100 that is relative to the other wireless electronic device, using the different signal received in Block 330A'. Moreover, operations of the wireless electronic device 100 may next include comparing (Block 340) the respective relative positions from Block 300 and Block 330E with each other, and calculating (Block 350) a position-location (e.g., in relative or absolute terms) of the wireless electronic device 100, using a result of the comparison in Block 340.

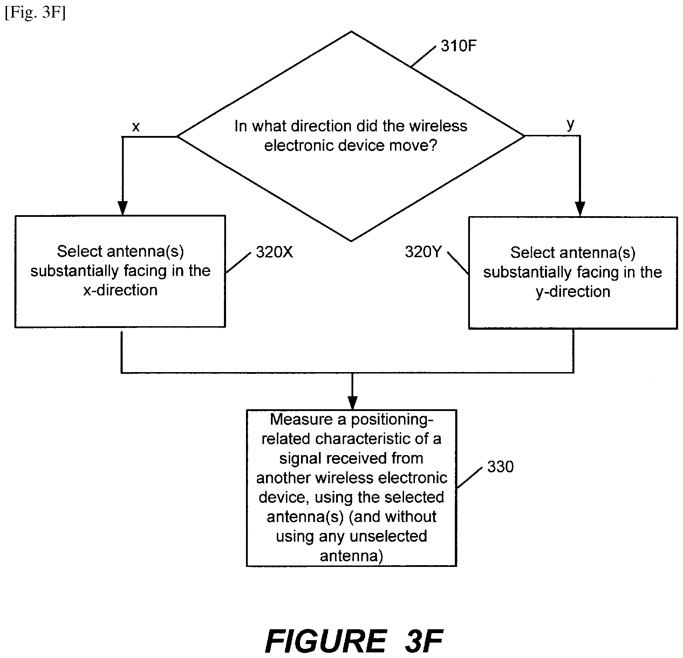

Referring now to Figure 3F, operations of detecting (Block 310) movement of the wireless electronic device 100 may include determining (Block 310F) the direction in which the wireless electronic device 100 moves. As one example, Figure 3F illustrates determining whether the wireless electronic device 100 moves in one of two different directions (directions x and y). In response to the determination in Block 310F, the wireless electronic device 100 subsequently selects antenna(s) 246 that either substantially face the x-direction (Block 320X) or substantially face the y-direction (Block 320Y). The inventive entity appreciates, however, that the wireless electronic device 100 may move in a variety of directions (i.e., more than two directions) in a three-dimensional space and is therefore not limited to the two directions provided in the example of Figure 3F.

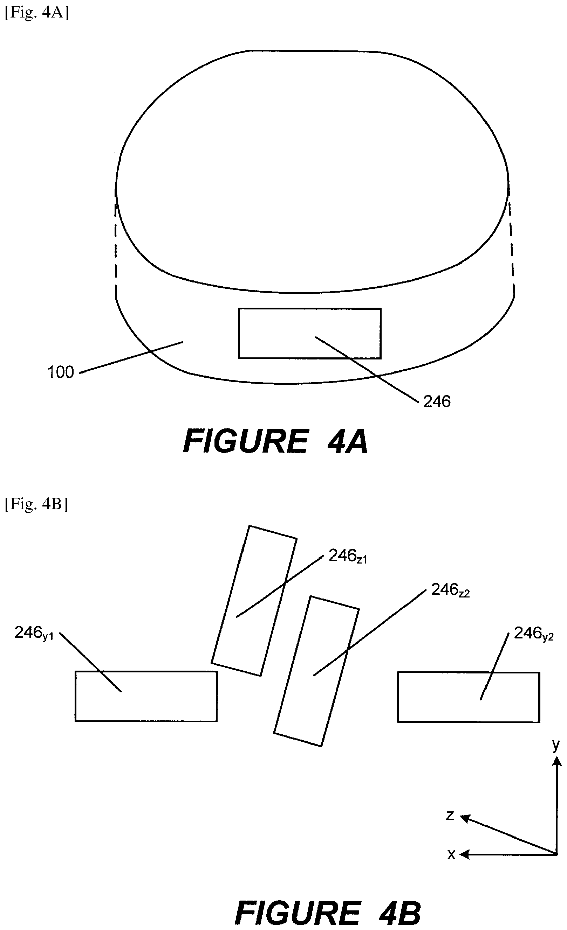

Referring now to Figure 4A, a diagram of a wearable wireless electronic device of Figure 1 is provided, according to some embodiments of present inventive concepts. In particular, Figure 4A illustrates an example of a wireless electronic device 100 that is a wearable wireless electronic device. As an example, the wearable wireless electronic device 100 may be a wristband that includes the plurality of antennas 246. Moreover, the wearable wireless electronic device 100 may include a Wi-Fi transceiver and/or a Bluetooth transceiver (e.g., the short-range radio transceiver 225). Specifically, the wristband may be a smartband that is made of silicone, rubber, and/or another flexible material, and that includes one or more small electronic devices integrated therein to provide short-range communications and/or other communications (e.g., cellular communications). The inventive entity appreciates, however, that a watch, an armband, a headband, a band for the user 411's leg, or any other wearable device may be used for the wearable electronic device 100.

Referring now to Figures 4B and 4C, diagrams of antennas of a wireless electronic device 100 of Figure 1 are provided, according to some embodiments of present inventive concepts. Referring to Figure 4B, the wireless electronic device 100 may, in some embodiments, include two or more antennas 246. For example, the wireless electronic device 100 may include antennas 246_{y1} and 246_{y2} that substantially face in the y-direction and/or antennas 246_{z1} and 246_{z2} that substantially face in the z-direction. In other words, a primary surface , i.e., a surface with the largest surface area, of the antenna 246_{y1} faces substantially in the y-direction, as does a primary surface of the antenna 246_{y2}. The respective primary surfaces of the antennas 246_{y1} and 246_{y2} thus define a plane that substantially faces in the y-direction. Similarly, respective primary surfaces of the antennas 246_{z1} and 246_{z2} substantially face in the z-direction and thus define a plane that substantially faces in the z-direction.

The inventive entity appreciates that the wireless electronic device 100 including the two or more of the antennas 246 illustrated in Figure 4B maybe a wearable wireless electronic device (e.g., the wearable wireless electronic device 100 illustrated in Figure 4A) or may be another type of portable wireless electronic device such as a cellular phone or a laptop or tablet computer. Moreover, the inventive entity appreciates that more or fewer of the antennas 246 illustrated in Figure 4B may be provided, and/or that the antennas 246 may face in other directions (e.g., the x-direction or another direction) than the y-direction and the z-direction illustrated in Figure 4B. Furthermore, although the antennas 246_{z1} and 246_{z2} are illustrated as one pair of antennas 246 and the antennas 246yi and 246_{y2} are illustrated as another pair of antennas 246, more or fewer pairs of antennas 246 may be provided, and/or three or more antennas 246 (rather than a pair) may define a plane. Additionally or alternatively, a group of antennas 246 that defines a plane may be directly beside each other or may have one or more other antennas 246 therebetween that are (e.g., have respective primary surfaces) substantially outside of the plane.

Referring to Figure 4C, an example is provided in which the antennas 246_{z1} and 246_{z2} are illustrated in one plane (x-y plane) and the antennas 246_{y1} and 246_{y2} are illustrated in another plane (x-z plane). In particular, Figure 4C illustrates a model of an arm of the user 411 on which the user 411 wears a wearable wireless electronic device 100_{A} (e.g., the wireless electronic device of Figures 3A-3F), while the user 411 holds another wireless electronic device 100_{B} (e.g., the other wireless electronic device of Figures 3A-3F) in a hand of the user 411. Specifically, the arm of the user 110 is modeled as a cuboid that includes, for example, faces in the x-y and x-z planes.

As illustrated in Figure 4C, the user 411 may be a user of both the wearable wireless electronic device 100_{A} and the other wireless electronic device 100_{B}. The wearable wireless electronic device 100_{A} may be a wristband, a watch (e.g., a smart watch), or an armband that includes a short-range transceiver 225 that is configured to provide short-range communications with the other wireless electronic device 100_{B}. The wearable wireless electronic device 100_{A} may be wrapped partially or completely around a limb of the user 411, or otherwise attached to the user 411, and the other wireless electronic device 100_{B} may contemporaneously be held by a hand of the user 411 (or may be in a pocket of the user 411 or somewhere else in the same room/building as the user 411).

The present inventive entity appreciates that navigation and location functions have been incorporated into some wireless technologies. Moreover, Bluetooth and Wireless Local Area Network (WLAN) technologies may add angle-of-arrival and angle-of-departure functions. For example, potential use cases for Bluetooth angle-of-arrival and angle-of-departure capabilities may include indoor positioning/navigation (because satellite-based positioning may not work well indoors) and high-accuracy asset tracking. As an example, a Bluetooth beacon may provide/transmit location information to a portable wireless electronic device 100, which may calculate an angle of arrival/departure of a radio wave from the Bluetooth beacon to make a position calculation. Accordingly, the present inventive entity appreciates that usage of the antennae 246 for positioning may be in the context of peer-to-peer (P2P) positioning between two wireless electronic devices. For example, the antennae 246 may be in a Bluetooth wearable device located near a smartphone, and may use signals received from the smartphone for positioning. In another example, the antennae 246 may be in a phone located near (and receiving signals from) a Wi-Fi Access point, a wearable wireless electronic device, or another phone.

Such inter-device relative positioning support may add a new dimension to how users use wearable and stationary wireless electronic devices. Moreover, as functions such as continuous tracking, movement alarms, etc. may benefit from always being on, solutions for power saving may be valuable. Accordingly, various embodiments described herein may reduce power consumption effects of wireless functions used for relative positioning and directivity. An example of relative positioning is that the wireless electronic device 100 is ten (10) meters from another wireless electronic device 170/130a/130b/100, whereas an example of directivity is the direction in which the wireless electronic device 100 is heading/moving.

Various embodiments described herein may use inertial-sensor-controlled antenna multiplexing to determine a position of a portable wireless electronic device 100 relative to another wireless electronic device 170/130a/130b/100 that transmits signals to the portable wireless electronic device 100. For example, detection of a direction toward the transmitting wireless electronic device 170/130a/130b/100 may be based on the wireless electronic device 100 having two or more antennas 246 active in parallel. A difference in phase between received signals from the antennas 246 can be transformed (e.g., via mathematical models) to estimate the angle toward the transmitting wireless electronic device 170/130a/130b/100.

In particular, although measuring signals using all of the antennas 246 to detect movement of the wireless electronic device 100 relative to the transmitting wireless electronic device 170/130a/130b/100 may cause high/excessive power consumption, various embodiments described herein may use input from one or more movement sensors 261 to switch between active pairs of antennas 246. With this strategy, it may be possible to choose the best (in terms of the direction the wireless electronic device 100 is moving/facing) pair of antennas 246 for measurement(s), based on input from the movement sensor(s) 261, which can save power and latency for the user 411. Moreover, although various embodiments describe selecting ones of the antennas 246 based on movement of the wireless electronic device 100, the inventive entity appreciates that the wireless electronic device 100 may additionally or alternatively select a subset of the plurality of antennas 246 based on the orientation of the wireless electronic device 100 (e.g., the orientation of the wireless electronic device 100 with respect to the other wireless electronic device).

In the drawings and specification, there have been disclosed various embodiments and, although specific terms are employed, they are used in a generic and descriptive sense only and not for purposes of limitation.

## Claims

1. A method of antenna selection in a first wireless electronic device, the method comprising:
- detecting movement of the first wireless electronic device;
- selecting an antenna among a plurality of antennas of the first wireless electronic device, in response to the movement of the first wireless electronic device; and
- measuring a positioning-related characteristic of a signal from a second wireless electronic device, using the antenna that was selected in response to the movement,
wherein measuring the positioning-related characteristic of the signal comprises:
- receiving the signal from the second wireless electronic device via the antenna that was selected in response to the movement; and
- determining a position of the first wireless electronic device with respect to the second wireless electronic device, using the signal received from the second wireless electronic device via the antenna that was selected in response to the movement,
wherein the signal received from the second wireless electronic device comprises a short-range wireless signal, and
wherein determining the position of the first wireless electronic device with respect to the second wireless electronic device comprises:
- estimating an angle of a arrival of the short-range wireless signal received from the second wireless electronic device via the antenna that was selected in response to the movement.

2. The method of Claim 1,
wherein selecting the antenna comprises selecting two or more antennas, among the plurality of antennas of the first wireless electronic device, in response to the movement of the first wireless electronic device, and
wherein measuring the positioning-related characteristic of the signal comprises measuring the positioning-related characteristic of the signal from the second wireless electronic device, using the two or more antennas that were selected in response to the movement,
wherein measuring the positioning-related characteristic of the signal comprises:
- measuring the positioning-related characteristic of the signal from the second wireless electronic device, using the two or more antennas that were selected in response to the movement, and without using any unselected antenna among the plurality of antennas of the first wireless electronic device.

3. The method of Claim 2,
wherein selecting the two or more antennas comprises selecting one or more pairs of antennas, among the plurality of antennas of the first wireless electronic device, in response to the movement of the first wireless electronic device, and
wherein measuring the positioning-related characteristic of the signal comprises measuring the positioning-related characteristic of the signal from the second wireless electronic device, using the one or more pairs of antennas that were selected in response to the movement, and without using any unselected antenna among the plurality of antennas of the first wireless electronic device.

4. The method of Claim 1,
wherein detecting the movement of the first wireless electronic device comprises detecting a direction of the movement of the first wireless electronic device, and
wherein selecting the antenna comprises selecting the antenna in response to detecting the direction of the movement of the first wireless electronic device and irrespective of signal conditions at the first wireless electronic device.

5. The method of Claim 2,
wherein detecting the movement of the first wireless electronic device comprises detecting a direction of the movement of the first wireless electronic device, and
wherein selecting the two or more antennas comprises selecting the two or more antennas in response to detecting the direction of the movement of the first wireless electronic device,
wherein the two or more antennas each have a primary surface corresponding to the surface having the largest surface area and the respective primary surfaces of the two or more antennas define a plane that is intersected by the direction of the movement of the first wireless electronic device at an angle of at least 45 degrees,
wherein selecting the two or more antennas comprises selecting the two or more antennas for which the plane defined by the primary surfaces is intersected by the direction of the movement of the first wireless electronic device at the angle of at least 45 degrees, in response to detecting the direction of the movement of the first wireless electronic device,
wherein any unselected antenna among the plurality of antennas of the first wireless electronic device is substantially outside of the plane defined by the primary surfaces of the selected antennas, and
wherein measuring the positioning-related characteristic of the signal comprises measuring the positioning-related characteristic of the signal from the second wireless electronic device, using the two or more antennas having the primary surfaces that define the plane that is intersected by the direction of the movement of the first wireless electronic device at the angle of at least 45 degrees, and without using any unselected antenna among the plurality of antennas of the first wireless electronic device that is outside of the plane.

6. The method of Claim 5,
wherein the plane defined by the primary surfaces of the two or more antennas faces in the direction of the movement of the first wireless electronic device.

7. The method of Claim 1,
wherein the first wireless electronic device comprises a wearable wireless electronic device,
wherein the short-range wireless signal comprises a Bluetooth signal or a Wireless Local Area Network (WLAN) signal, and
wherein estimating the angle of arrival of the short-range wireless signal comprises:
- estimating the angle of arrival of the Bluetooth signal or the WLAN signal received from the second wireless electronic device via the antenna that was selected in response to the movement.

8. The method of Claim 7,
wherein determining the position comprises determining the position of the wearable wireless electronic device, using the angle of arrival of the Bluetooth signal or WLAN signal.

9. The method of Claim 1,
wherein measuring the positioning-related characteristic of the signal comprises:
- receiving the signal from the second wireless electronic device via the antenna that was selected in response to the movement; and
- determining a position of the first wireless electronic device with respect to the second wireless electronic device, using the signal received from the second wireless electronic device via the antenna that was selected in response to the movement,
wherein the signal comprises a first signal,
wherein determining the position of the first wireless electronic device with respect to the second wireless electronic device comprises determining a first relative position of the first wireless electronic device that is relative to the second wireless electronic device, using the first signal received from the second wireless electronic device via the antenna that was selected in response to the movement, and
wherein the method further comprises:
- receiving a second signal, via the antenna, before detecting the movement of the first wireless electronic device;
- determining a second relative position of the first wireless electronic device that is relative to the second wireless electronic device, using the second signal received from the second wireless electronic device via the antenna, before detecting the movement of the first wireless electronic device;
- comparing the first and second relative positions of the first wireless electronic device; and
- calculating a position-location of the first wireless electronic device, using a result of comparing the first and second relative positions of the first wireless electronic device.

10. A first wireless electronic device, comprising:
- a plurality of antennas;
- a sensor configured to detect movement of the first wireless electronic device; and
- a processor configured to perform operations comprising:
- selecting an antenna, among the plurality of antennas of the first wireless electronic device, in response to the movement of the first wireless electronic device; and
- measuring a positioning-related characteristic of a signal received from a second wireless electronic device via the antenna that was selected in response to the movement,
wherein measuring the positioning-related characteristic of the signal comprises:
- receiving the signal from the second wireless electronic device via the antenna that was selected in response to the movement; and
- determining a position of the first wireless electronic device with respect to the second wireless electronic device, using the signal received from the second wireless electronic device via the antenna that was selected in response to the movement,
wherein the signal received from the second wireless electronic device comprises a short-range wireless signal, and
wherein determining the position of the first wireless electronic device with respect to the second wireless electronic device comprises:
- estimating an angle of arrival of the short-range wireless signal received from the second wireless electronic device via the antenna that was selected in response to the movement.

11. The device of Claim 10, wherein the processor is further configured to perform operations comprising:
- selecting two or more antennas, among the plurality of antennas of the first wireless electronic device, in response to the movement of the first wireless electronic device; and
- measuring the positioning-related characteristic of the signal received from a second wireless electronic device, using the two or more antennas that were selected in response to the movement, and without using any unselected antenna among the plurality of antennas of the first wireless electronic device,
wherein the sensor is further configured to detect a direction of the movement of the first wireless electronic device, and
wherein the processor is further configured to select the two or more antennas in response to detecting the direction of the movement of the first wireless electronic device,
wherein the antennas each have a primary surface corresponding to the surface having the largest surface area and the primary surfaces of the two or more antennas define a plane that is intersected by the direction of the movement of the first wireless electronic device at an angle of at least 45 degrees,
wherein the processor is further configured to select the two or more antennas having the primary surfaces that define the plane that is intersected by the direction of the movement of the first wireless electronic device at the angle of at least 45 degrees, in response to detecting the direction of the movement of the first wireless electronic device,
wherein any unselected antenna among the plurality of antennas of the first wireless electronic device is outside of the plane defined by the primary surfaces of the selected two or more antennas, and
wherein the processor is further configured to determine the position of the first wireless electronic device, using the two or more antennas having the primary surfaces that define the plane that is intersected by the direction of the movement of the first wireless electronic device at the angle of at least 45 degrees, and without using any unselected antenna among the plurality of antennas of the first wireless electronic device that is outside of the plane.

12. The device of Claim 11, further comprising:
a transceiver circuit configured to provide communications with the second wireless electronic device via a short-range communications link, wherein the signal comprises a short-range wireless signal, and wherein the first wireless electronic device comprises a wearable wireless electronic device.

## Patentansprüche

1. Verfahren zur Antennenauswahl in einer ersten drahtlosen elektronischen Vorrichtung, wobei das Verfahren Folgendes umfasst:
- Erfassen von Bewegung der ersten drahtlosen elektronischen Vorrichtung;
- Auswählen einer Antenne aus einer Vielzahl von Antennen der ersten drahtlosen elektronischen Vorrichtung als Reaktion auf die Bewegung der ersten drahtlosen elektronischen Vorrichtung; und
- Messen einer positionsbezogenen Eigenschaft eines Signals von einer zweiten drahtlosen elektronischen Vorrichtung unter Verwendung der Antenne, die als Reaktion auf die Bewegung ausgewählt wurde,
wobei das Messen der positionsbezogenen Eigenschaft des Signals Folgendes umfasst:
- Empfangen des Signals von der zweiten drahtlosen elektronischen Vorrichtung über die Antenne, die als Reaktion auf die Bewegung ausgewählt wurde; und
- Bestimmen einer Position der ersten drahtlosen elektronischen Vorrichtung in Bezug auf die zweite drahtlose elektronische Vorrichtung unter Verwendung des Signals, das von der zweiten drahtlosen elektronischen Vorrichtung über die Antenne, die als Reaktion auf die Bewegung ausgewählt wurde, empfangen wird,
wobei das Signal, das von der zweiten drahtlosen elektronischen Vorrichtung empfangen wird, ein drahtloses Nahbereichssignal umfasst, und
wobei das Bestimmen der Position der ersten drahtlosen elektronischen Vorrichtung in Bezug auf die zweite drahtlose elektronische Vorrichtung Folgendes umfasst:
- Schätzen eines Ankunftswinkels des drahtlosen Nahbereichssignals, das von der zweiten drahtlosen elektronischen Vorrichtung über die Antenne, die als Reaktion auf die Bewegung ausgewählt wurde, empfangen wird.

2. Verfahren nach Anspruch 1,
wobei das Auswählen der Antenne das Auswählen von zwei oder mehr Antennen aus der Vielzahl von Antennen der ersten drahtlosen elektronischen Vorrichtung als Reaktion auf die Bewegung der ersten drahtlosen elektronischen Vorrichtung umfasst, und wobei das Messen der positionsbezogenen Eigenschaft des Signals das Messen der positionsbezogenen Eigenschaft des Signals von der zweiten drahtlosen elektronischen Vorrichtung unter Verwendung der zwei oder mehr Antennen umfasst, die als Reaktion auf die Bewegung ausgewählt wurden,
wobei das Messen der positionsbezogenen Eigenschaft des Signals Folgendes umfasst:
- Messen der positionsbezogenen Eigenschaft des Signals von der zweiten drahtlosen elektronischen Vorrichtung unter Verwendung der zwei oder mehr Antennen, die als Reaktion auf die Bewegung ausgewählt wurden, und ohne Verwendung einer beliebigen nicht ausgewählten Antenne aus der Vielzahl von Antennen der ersten drahtlosen elektronischen Vorrichtung.

3. Verfahren nach Anspruch 2,
wobei das Auswählen der zwei oder mehr Antennen das Auswählen von einem oder mehreren Paaren an Antennen aus der Vielzahl von Antennen der ersten drahtlosen elektronischen Vorrichtung als Reaktion auf die Bewegung der ersten drahtlosen elektronischen Vorrichtung umfasst, und
wobei das Messen der positionsbezogenen Eigenschaft des Signals das Messen der positionsbezogenen Eigenschaft des Signals von der zweiten drahtlosen elektronischen Vorrichtung unter Verwendung des einen oder der mehreren Paare an Antennen, die als Reaktion auf die Bewegung ausgewählt wurden, und ohne Verwendung einer beliebigen nicht ausgewählten Antenne aus der Vielzahl von Antennen der ersten drahtlosen elektronischen Vorrichtung umfasst.

4. Verfahren nach Anspruch 1,
wobei das Erfassen der Bewegung der ersten drahtlosen elektronischen Vorrichtung das Erfassen einer Richtung der Bewegung der ersten drahtlosen elektronischen Vorrichtung umfasst, und
wobei das Auswählen der Antenne das Auswählen der Antenne als Reaktion auf das Erfassen der Richtung der Bewegung der ersten drahtlosen elektronischen Vorrichtung und unabhängig von Signalzuständen an der ersten drahtlosen elektronischen Vorrichtung umfasst.

5. Verfahren nach Anspruch 2,
wobei das Erfassen der Bewegung der ersten drahtlosen elektronischen Vorrichtung das Erfassen einer Richtung der Bewegung der ersten drahtlosen elektronischen Vorrichtung umfasst, und
wobei das Auswählen der zwei oder mehr Antennen das Auswählen der zwei oder mehr Antennen als Reaktion auf das Erfassen der Richtung der Bewegung der ersten drahtlosen elektronischen Vorrichtung umfasst,
wobei die zwei oder mehr Antennen jeweils eine primäre Oberfläche aufweisen, die der Oberfläche entspricht, die den größten Oberflächenbereich aufweist, und die jeweiligen primären Oberflächen der zwei oder mehr Antennen eine Ebene definieren, die durch die Richtung der Bewegung der ersten drahtlosen elektronischen Vorrichtung in einem Winkel von zumindest 45 Grad geschnitten wird,
wobei das Auswählen der zwei oder mehr Antennen das Auswählen der zwei oder mehr Antennen, für die die Ebene, die durch die primären Oberflächen definiert ist, durch die Richtung der Bewegung der ersten drahtlosen elektronischen Vorrichtung in einem Winkel von zumindest 45 Grad geschnitten wird, als Reaktion auf das Erfassen der Richtung der Bewegung der ersten drahtlosen elektronischen Vorrichtung umfasst,
wobei sich eine beliebige nicht ausgewählte Antenne aus der Vielzahl von Antennen der ersten drahtlosen elektronischen Vorrichtung im Wesentlichen außerhalb der Ebene befindet, die durch die primären Oberflächen der ausgewählten Antennen definiert ist, und
wobei das Messen der positionsbezogenen Eigenschaft des Signals das Messen der positionsbezogenen Eigenschaft des Signals von der zweiten drahtlosen elektronischen Vorrichtung unter Verwendung der zwei oder mehr Antennen, die die primären Oberflächen aufweisen, die die Ebene definieren, die durch die Richtung der Bewegung der ersten drahtlosen elektronischen Vorrichtung im Winkel von zumindest 45 Grad geschnitten wird, und ohne Verwendung einer beliebigen nicht ausgewählten Antenne aus der Vielzahl von Antennen der ersten drahtlosen elektronischen Vorrichtung, die sich außerhalb der Ebene befindet, umfasst.

6. Verfahren nach Anspruch 5,
wobei die Ebene, die durch die primären Oberflächen der zwei oder mehr Antennen definiert ist, der Richtung der Bewegung der ersten drahtlosen elektronischen Vorrichtung zugewandt ist.

7. Verfahren nach Anspruch 1,
wobei die erste drahtlose elektronische Vorrichtung eine tragbare drahtlose elektronische Vorrichtung umfasst,
wobei das drahtlose Nahbereichssignal ein Bluetooth-Signal oder ein Wireless-Local-Area-Network-(WLAN-)Signal umfasst, und wobei das Schätzen des Ankunftswinkels des drahtlosen Nahbereichssignals Folgendes umfasst:
- Schätzen des Ankunftswinkels des Bluetooth-Signals oder des WLAN-Signals, das von der zweiten drahtlosen elektronischen Vorrichtung über die Antenne, die als Reaktion auf die Bewegung ausgewählt wurde, empfangen wird.

8. Verfahren nach Anspruch 7,
wobei das Bestimmen der Position das Bestimmen der Position der tragbaren drahtlosen elektronischen Vorrichtung unter Verwendung des Ankunftswinkels des Bluetooth-Signals oder des WLAN-Signals umfasst.

9. Verfahren nach Anspruch 1,
wobei das Messen der positionsbezogenen Eigenschaft des Signals Folgendes umfasst:
- Empfangen des Signals von der zweiten drahtlosen elektronischen Vorrichtung über die Antenne, die als Reaktion auf die Bewegung ausgewählt wurde; und
- Bestimmen einer Position der ersten drahtlosen elektronischen Vorrichtung in Bezug auf die zweite drahtlose elektronische Vorrichtung unter Verwendung des Signals, das von der zweiten drahtlosen elektronischen Vorrichtung über die Antenne, die als Reaktion auf die Bewegung ausgewählt wurde, empfangen wird,
wobei das Signal ein erstes Signal umfasst,
wobei das Bestimmen der Position der ersten drahtlosen elektronischen Vorrichtung in Bezug auf die zweite drahtlose elektronische Vorrichtung das Bestimmen einer ersten relativen Position der ersten drahtlosen elektronischen Vorrichtung, die relativ zu der zweiten drahtlosen elektronischen Vorrichtung ist, unter Verwendung des ersten Signals umfasst, das von der zweiten drahtlosen elektronischen Vorrichtung über die Antenne, die als Reaktion auf die Bewegung ausgewählt wurde, empfangen wird, und
wobei das Verfahren ferner Folgendes umfasst:
- Empfangen eines zweiten Signals über die Antenne vor dem Erfassen der Bewegung der ersten drahtlosen elektronischen Vorrichtung;
- Bestimmen einer zweiten relativen Position der ersten drahtlosen elektronischen Vorrichtung, die relativ zu der zweiten drahtlosen elektronischen Vorrichtung ist, unter Verwendung des zweiten Signals, das von der zweiten drahtlosen elektronischen Vorrichtung über die Antenne empfangen wird, vor dem Erfassen der Bewegung der ersten drahtlosen elektronischen Vorrichtung;
- Vergleichen der ersten und der zweiten relativen Position der ersten drahtlosen elektronischen Vorrichtung; und
- Berechnen einer Positionsstelle der ersten drahtlosen elektronischen Vorrichtung unter Verwendung eines Ergebnisses des Vergleichens der ersten und der zweiten relativen Position der ersten drahtlosen elektronischen Vorrichtung.

10. Erste drahtlose elektronische Vorrichtung, umfassend:
- eine Vielzahl von Antennen;
- einen Sensor, der konfiguriert ist, um Bewegung der ersten drahtlosen elektronischen Vorrichtung zu erfassen; und
- einen Prozessor, der konfiguriert ist, um Vorgänge durchzuführen, die Folgendes umfassen:
- Auswählen einer Antenne aus der Vielzahl von Antennen der ersten drahtlosen elektronischen Vorrichtung als Reaktion auf die Bewegung der ersten drahtlosen elektronischen Vorrichtung; und
- Messen einer positionsbezogenen Eigenschaft eines Signals, das von einer zweiten drahtlosen elektronischen Vorrichtung über die Antenne, die als Reaktion auf die Bewegung ausgewählt wurde, empfangen wird,
wobei das Messen der positionsbezogenen Eigenschaft des Signals Folgendes umfasst:
- Empfangen des Signals von der zweiten drahtlosen elektronischen Vorrichtung über die Antenne, die als Reaktion auf die Bewegung ausgewählt wurde; und
- Bestimmen einer Position der ersten drahtlosen elektronischen Vorrichtung in Bezug auf die zweite drahtlose elektronische Vorrichtung unter Verwendung des Signals, das von der zweiten drahtlosen elektronischen Vorrichtung über die Antenne, die als Reaktion auf die Bewegung ausgewählt wurde, empfangen wird,
wobei das Signal, das von der zweiten drahtlosen elektronischen Vorrichtung empfangen wird, ein drahtloses Nahbereichssignal umfasst, und
wobei das Bestimmen der Position der ersten drahtlosen elektronischen Vorrichtung in Bezug auf die zweite drahtlose elektronische Vorrichtung Folgendes umfasst:
- Schätzen eines Ankunftswinkels des drahtlosen Nahbereichssignals, das von der zweiten drahtlosen elektronischen Vorrichtung über die Antenne, die als Reaktion auf die Bewegung ausgewählt wurde, empfangen wird.

11. Vorrichtung nach Anspruch 10, wobei der Prozessor ferner konfiguriert ist, um Vorgänge durchzuführen, die Folgendes umfassen:
- Auswählen von zwei oder mehr Antennen aus der Vielzahl von Antennen der ersten drahtlosen elektronischen Vorrichtung als Reaktion auf die Bewegung der ersten drahtlosen elektronischen Vorrichtung; und
- Messen der positionsbezogenen Eigenschaft des Signals, das von einer zweiten drahtlosen elektronischen Vorrichtung empfangen wird, unter Verwendung der zwei oder mehr Antennen, die als Reaktion auf die Bewegung ausgewählt wurden, und ohne Verwendung einer beliebigen nicht ausgewählten Antenne aus der Vielzahl von Antennen der ersten drahtlosen elektronischen Vorrichtung,
wobei der Sensor ferner konfiguriert ist, um eine Richtung der Bewegung der ersten drahtlosen elektronischen Vorrichtung zu erfassen, und
wobei der Prozessor ferner konfiguriert ist, um die zwei oder mehr Antennen als Reaktion auf das Erfassen der Richtung der Bewegung der ersten drahtlosen elektronischen Vorrichtung auszuwählen,
wobei die Antennen jeweils eine primäre Oberfläche aufweisen, die der Oberfläche entspricht, die den größten Oberflächenbereich aufweist, und die primären Oberflächen der zwei oder mehr Antennen eine Ebene definieren, die durch die Richtung der Bewegung der ersten drahtlosen elektronischen Vorrichtung in einem Winkel von zumindest 45 Grad geschnitten wird,
wobei der Prozessor ferner konfiguriert ist, um die zwei oder mehr Antennen, die die primären Oberflächen aufweisen, die die Ebene definieren, die durch die Richtung der Bewegung der ersten drahtlosen elektronischen Vorrichtung im Winkel von zumindest 45 Grad geschnitten wird, als Reaktion auf das Erfassen der Richtung der Bewegung der ersten drahtlosen elektronischen Vorrichtung auszuwählen,
wobei sich eine beliebige nicht ausgewählte Antenne aus der Vielzahl von Antennen der ersten drahtlosen elektronischen Vorrichtung außerhalb der Ebene befindet, die durch die primären Oberflächen der ausgewählten zwei oder mehr Antennen definiert ist, und
wobei der Prozessor ferner konfiguriert ist, um die Position der ersten drahtlosen elektronischen Vorrichtung unter Verwendung der zwei oder mehr Antennen, die die primären Oberflächen aufweisen, die die Ebene definieren, die durch die Richtung der Bewegung der ersten drahtlosen elektronischen Vorrichtung im Winkel von zumindest 45 Grad geschnitten wird, und ohne Verwendung einer beliebigen nicht ausgewählten Antenne aus der Vielzahl von Antennen der ersten drahtlosen elektronischen Vorrichtung, die sich außerhalb der Ebene befindet, zu bestimmen.

12. Vorrichtung nach Anspruch 11, ferner umfassend:
eine Sendeempfängerschaltung, die konfiguriert ist, um Kommunikation mit der zweiten drahtlosen elektronischen Vorrichtung über eine Nahbereichskommunikationsverbindung bereitzustellen, wobei das Signal ein drahtloses Nahbereichssignal umfasst und wobei die erste drahtlose elektronische Vorrichtung eine tragbare drahtlose elektronische Vorrichtung umfasst.

## Revendications

1. Procédé de sélection d'antenne dans un premier dispositif électronique sans fil, le procédé comprenant les étapes consistant à :
- détecter un déplacement du premier dispositif électronique sans fil ;
- sélectionner une antenne parmi une pluralité d'antennes du premier dispositif électronique sans fil, en réponse au déplacement du premier dispositif électronique sans fil ; et
- mesurer une caractéristique connexe au positionnement d'un signal en provenance d'un second dispositif électronique sans fil, en utilisant l'antenne qui a été sélectionnée en réponse au déplacement ;
dans lequel l'étape de mesure de la caractéristique connexe au positionnement du signal comprend les étapes consistant à :
- recevoir le signal en provenance du second dispositif électronique sans fil, par l'intermédiaire de l'antenne qui a été sélectionnée en réponse au déplacement ; et
- déterminer une position du premier dispositif électronique sans fil par rapport au second dispositif électronique sans fil, en utilisant le signal reçu en provenance du second dispositif électronique sans fil par l'intermédiaire de l'antenne qui a été sélectionnée en réponse au déplacement ;
dans lequel le signal reçu en provenance du second dispositif électronique sans fil comprend un signal sans fil à courte portée ; et
dans lequel l'étape de détermination de la position du premier dispositif électronique sans fil par rapport au second dispositif électronique sans fil comprend l'étape consistant à :
- estimer un angle d'arrivée du signal sans fil à courte portée reçu en provenance du second dispositif électronique sans fil par l'intermédiaire de l'antenne qui a été sélectionnée en réponse au déplacement.

2. Procédé selon la revendication 1,
dans lequel l'étape de sélection de l'antenne consiste à sélectionner deux ou plus de deux antennes, parmi la pluralité d'antennes du premier dispositif électronique sans fil, en réponse au déplacement du premier dispositif électronique sans fil ; et
dans lequel l'étape de mesure de la caractéristique connexe au positionnement du signal consiste à mesurer la caractéristique connexe au positionnement du signal en provenance du second dispositif électronique sans fil, en utilisant les deux ou plus de deux antennes qui ont été sélectionnées en réponse au déplacement ;
dans lequel l'étape de mesure de la caractéristique connexe au positionnement du signal comprend l'étape ci-dessous consistant à :
- mesurer la caractéristique connexe au positionnement du signal en provenance du second dispositif électronique sans fil, en utilisant les deux ou plus de deux antennes qui ont été sélectionnées en réponse au déplacement, et sans utiliser une quelconque antenne non sélectionnée parmi la pluralité d'antennes du premier dispositif électronique sans fil.

3. Procédé selon la revendication 2,
dans lequel l'étape de sélection des deux ou plus de deux antennes consiste à sélectionner une ou plusieurs paires d'antennes, parmi la pluralité d'antennes du premier dispositif électronique sans fil, en réponse au déplacement du premier dispositif électronique sans fil ; et
dans lequel l'étape de mesure de la caractéristique connexe au positionnement du signal consiste à mesurer la caractéristique connexe au positionnement du signal en provenance du second dispositif électronique sans fil, en utilisant les une ou plusieurs paires d'antennes qui ont été sélectionnées en réponse au déplacement, et sans utiliser une quelconque antenne non sélectionnée parmi la pluralité d'antennes du premier dispositif électronique sans fil.

4. Procédé selon la revendication 1,
dans lequel l'étape de détection du déplacement du premier dispositif électronique sans fil consiste à détecter une direction du déplacement du premier dispositif électronique sans fil, et dans lequel l'étape de sélection de l'antenne consiste à sélectionner l'antenne en réponse à la détection de la direction du déplacement du premier dispositif électronique sans fil, et indépendamment de conditions de signal du premier dispositif électronique sans fil.

5. Procédé selon la revendication 2,
dans lequel l'étape de détection du déplacement du premier dispositif électronique sans fil consiste à détecter une direction du déplacement du premier dispositif électronique sans fil ; et
dans lequel l'étape de sélection des deux ou plus de deux antennes consiste à sélectionner les deux ou plus de deux antennes en réponse à la détection de la direction du déplacement du premier dispositif électronique sans fil ;
dans lequel les deux ou plus de deux antennes présentent chacune une surface primaire correspondant à la surface présentant la plus grande superficie, et les surfaces primaires respectives des deux ou plus de deux antennes définissent un plan qui est coupé par la direction du déplacement du premier dispositif électronique sans fil selon un angle d'au moins 45 degrés ;
dans lequel l'étape de sélection des deux ou plus de deux antennes consiste à sélectionner les deux ou plus de deux antennes pour lesquelles le plan défini par les surfaces primaires est coupé par la direction du déplacement du premier dispositif électronique sans fil selon un angle d'au moins 45 degrés, en réponse à la détection de la direction du déplacement du premier dispositif électronique sans fil ;
dans lequel une quelconque antenne non sélectionnée parmi la pluralité d'antennes du premier dispositif électronique sans fil est sensiblement en dehors du plan défini par les surfaces primaires des antennes sélectionnées ; et
dans lequel l'étape de mesure de la caractéristique connexe au positionnement du signal consiste à mesurer la caractéristique connexe au positionnement du signal en provenance du second dispositif électronique sans fil, en utilisant les deux ou plus de deux antennes présentant les surfaces primaires qui définissent le plan qui est coupé par la direction du déplacement du premier dispositif électronique sans fil selon un angle d'au moins 45 degrés, et sans utiliser une quelconque antenne non sélectionnée, parmi la pluralité d'antennes du premier dispositif électronique sans fil, qui est en dehors du plan.

6. Procédé selon la revendication 5,
dans lequel le plan défini par les surfaces primaires des deux ou plus de deux antennes est orienté dans la direction du déplacement du premier dispositif électronique sans fil.

7. Procédé selon la revendication 1,
dans lequel le premier dispositif électronique sans fil comprend un dispositif électronique sans fil portable ;
dans lequel le signal sans fil à courte portée comprend un signal Bluetooth ou un signal de réseau local sans fil (WLAN) ; et
dans lequel l'étape d'estimation de l'angle d'arrivée du signal sans fil à courte portée comprend l'étape consistant à :
- estimer l'angle d'arrivée du signal Bluetooth ou du signal de réseau WLAN reçu en provenance du second dispositif électronique sans fil, par l'intermédiaire de l'antenne qui a été sélectionnée en réponse au déplacement.

8. Procédé selon la revendication 7,
dans lequel l'étape de détermination de la position consiste à déterminer la position du dispositif électronique sans fil portable, en utilisant l'angle d'arrivée du signal Bluetooth ou du signal de réseau WLAN.

9. Procédé selon la revendication 1,
dans lequel l'étape de mesure de la caractéristique connexe au positionnement du signal comprend les étapes consistant à :
- recevoir le signal en provenance du second dispositif électronique sans fil par l'intermédiaire de l'antenne qui a été sélectionnée en réponse au déplacement ; et
- déterminer une position du premier dispositif électronique sans fil par rapport au second dispositif électronique sans fil, en utilisant le signal reçu en provenance du second dispositif électronique sans fil, par l'intermédiaire de l'antenne qui a été sélectionnée en réponse au déplacement ;
dans lequel le signal comprend un premier signal ; dans lequel l'étape de détermination de la position du premier dispositif électronique sans fil par rapport au second dispositif électronique sans fil consiste à déterminer une première position relative du premier dispositif électronique sans fil qui est connexe au second dispositif électronique sans fil, en utilisant le premier signal reçu en provenance du second dispositif électronique sans fil, par l'intermédiaire de l'antenne qui a été sélectionnée en réponse au déplacement ; et
le procédé comprenant en outre les étapes consistant à :
- recevoir un second signal, par l'intermédiaire de l'antenne, avant de détecter le déplacement du premier dispositif électronique sans fil ;
- déterminer une seconde position relative, du premier dispositif électronique sans fil, qui est connexe au second dispositif électronique sans fil, en utilisant le second signal reçu en provenance du second dispositif électronique sans fil, par l'intermédiaire de l'antenne, avant de détecter le déplacement du premier dispositif électronique sans fil ;
- comparer les première et seconde positions relatives du premier dispositif électronique sans fil ; et
- calculer une position-localisation du premier dispositif électronique sans fil, en utilisant un résultat de l'étape de comparaison des première et seconde positions relatives du premier dispositif électronique sans fil.

10. Premier dispositif électronique sans fil, comprenant :
- une pluralité d'antennes ;
- un capteur configuré pour détecter un déplacement du premier dispositif électronique sans fil ; et
- un processeur configuré pour mettre en œuvre des opérations comprenant les étapes consistant à :
- une antenne, parmi la pluralité d'antennes du premier dispositif électronique sans fil, en réponse au déplacement du premier dispositif électronique sans fil ; et
- mesurer une caractéristique connexe au positionnement d'un signal reçu en provenance d'un second dispositif électronique sans fil, par l'intermédiaire de l'antenne qui a été sélectionnée en réponse au déplacement ;
dans lequel l'étape de mesure de la caractéristique connexe au positionnement du signal comprend les étapes consistant à :
- recevoir le signal en provenance du second dispositif électronique sans fil, par l'intermédiaire de l'antenne qui a été sélectionnée en réponse au déplacement ; et
- déterminer une position du premier dispositif électronique sans fil par rapport au second dispositif électronique sans fil, en utilisant le signal reçu en provenance du second dispositif électronique sans fil par l'intermédiaire de l'antenne qui a été sélectionnée en réponse au déplacement ;
dans lequel le signal reçu en provenance du second dispositif électronique sans fil comprend un signal sans fil à courte portée ; et
dans lequel l'étape de détermination de la position du premier dispositif électronique sans fil par rapport au second dispositif électronique sans fil comprend l'étape consistant à :
- estimer un angle d'arrivée du signal sans fil à courte portée reçu en provenance du second dispositif électronique sans fil par l'intermédiaire de l'antenne qui a été sélectionnée en réponse au déplacement.

11. Dispositif selon la revendication 10, dans lequel le processeur est en outre configuré pour mettre en œuvre des opérations comprenant les étapes consistant à :
- sélectionner deux ou plus de deux antennes, parmi la pluralité d'antennes du premier dispositif électronique sans fil, en réponse au déplacement du premier dispositif électronique sans fil ; et
- mesurer la caractéristique connexe au positionnement du signal reçu en provenance d'un second dispositif électronique sans fil, en utilisant les deux ou plus de deux antennes qui ont été sélectionnées en réponse au déplacement, et sans utiliser une quelconque antenne non sélectionnée parmi la pluralité d'antennes du premier dispositif électronique sans fil ;
dans lequel le capteur est en outre configuré pour détecter une direction du déplacement du premier dispositif électronique sans fil ; et
dans lequel le processeur est en outre configuré pour sélectionner les deux ou plus de deux antennes en réponse à la détection de la direction du déplacement du premier dispositif électronique sans fil ;
dans lequel les antennes présentent chacune une surface primaire correspondant à la surface présentant la plus grande superficie, et les surfaces primaires des deux ou plus de deux antennes définissent un plan qui est coupé par la direction du déplacement du premier dispositif électronique sans fil selon un angle d'au moins 45 degrés ;
dans lequel le processeur est en outre configuré pour sélectionner les deux ou plus de deux antennes présentant les surfaces primaires qui définissent le plan qui est coupé par la direction du déplacement du premier dispositif électronique sans fil selon un angle d'au moins 45 degrés, en réponse à la détection de la direction du déplacement du premier dispositif électronique sans fil ;
dans lequel une quelconque antenne non sélectionnée parmi la pluralité d'antennes du premier dispositif électronique sans fil est en dehors du plan défini par les surfaces primaires des deux ou plus de deux antennes sélectionnées ; et
dans lequel le processeur est en outre configuré pour déterminer la position du premier dispositif électronique sans fil, en utilisant les deux ou plus de deux antennes présentant les surfaces primaires qui définissent le plan qui est coupé par la direction du déplacement du premier dispositif électronique sans fil selon un angle d'au moins 45 degrés, et sans utiliser une quelconque antenne non sélectionnée parmi la pluralité d'antennes du premier dispositif électronique sans fil, qui est en dehors du plan.

12. Dispositif selon la revendication 11, comprenant en outre :
un circuit émetteur-récepteur configuré pour fournir des communications avec le second dispositif électronique sans fil, par l'intermédiaire d'une liaison de communication à courte portée, où le signal comprend un signal sans fil à courte portée, et où le premier dispositif électronique sans fil consiste en un dispositif électronique sans fil portable.
